# FASCICULE DE BREVET EUROPEEN

(11) **EP 2 337 053 B1**
(45) Date de publication et mention de la délivrance du brevet: **08.01.2014**
(21) Numéro de dépôt: 10188956.6
(22) Date de dépôt: 26.10.2010
(51) Int. Cl.: H01H 35/34, H01H 37/32, H01H 37/76, H01M 2/12

(54) **Coupe-circuit active thermo mecaniquement**
BATTERIEAUSSCHALTER MIT ACTIVEM THERMOMECHANISCHEM ELEMENT
BATTERY CUT OUT WITH ACTIVE THERMOMECHANICAL ELEMENT

(30) Priorité: 17.11.2009 FR 0958120
(43) Date de publication de la demande: 22.06.2011
(73) Titulaire: Saft Groupe S.A., 93170 Bagnolet (FR)
(72) Inventeur: Borel, Philippe, 33520, Bruges (FR); Tessier, Cécile, 33520, Bruges (FR)
(74) Mandataire: Hirsch & Associés

(56) Documents cités:
- WO-A1-98/45887
- JP-A- 10 208 726

## Description

### DOMAINE TECHNIQUE

La présente invention se rapporte à un dispositif coupe-circuit de sécurité. En particulier à un dispositif coupe-circuit de sécurité adapté à une utilisation dans un accumulateur.

### ETAT DE LA TECHNIQUE

Un accumulateur ou générateur électrochimique (ces deux termes étant équivalents, on utilisera le terme d'accumulateur dans la présente description) comprend de façon connue en soi un faisceau électrochimique comportant une alternance d'électrodes positives et négatives encadrant des séparateurs, l'ensemble du faisceau étant imprégné d'électrolyte. Chaque électrode comprend un collecteur de courant métallique supportant sur au moins une de ses faces une matière électrochimiquement active. L'électrode est connectée électriquement à une sortie de courant qui assure la continuité électrique entre l'électrode et l'application extérieure à laquelle l'accumulateur est associé. Le faisceau électrochimique est disposé dans un conteneur fermé de manière étanche par un couvercle.

Un accumulateur est généralement conçu pour fonctionner dans des conditions dites nominales, c'est-à-dire dans des gammes de température, courant et tension données. L'utilisation d'un accumulateur hors des conditions nominales, comme par exemple une surcharge accidentelle, un court-circuit, ou une température externe supérieure à la température maximale de fonctionnement, crée un risque d'explosion. En effet, de telles situations peuvent entraîner un échauffement de l'électrolyte et la formation de vapeurs d'électrolyte. L'accumulation de ces vapeurs dans le conteneur entraîne une augmentation de la pression interne de l'accumulateur, qui peut conduire à un éclatement violent du conteneur et à la projection de composés chimiques nocifs et corrosifs pour l'environnement et les personnes situées à proximité.

Typiquement un dispositif coupe-circuit de sécurité peut être intégré dans le couvercle de l'accumulateur. Le dispositif de sécurité est apte à interrompre rapidement le circuit électrique dans l'accumulateur dans le cas d'un fonctionnement hors des conditions nominales. Ainsi, l'accumulateur cesse de fonctionner. La fonction coupe-circuit permet d'isoler électriquement de cet accumulateur, et de façon irréversible, les appareils connectés à l'accumulateur.

Le dispositif de sécurité peut également comprendre une fonction d'évent de sécurité afin d'éviter l'accumulation des gaz à l'intérieur du conteneur de l'accumulateur, et permettre leur évacuation lorsque la pression interne excède une valeur prédéterminée. Le dégagement du gaz par cet évent permet d'éviter une explosion de l'accumulateur.

Le dispositif de sécurité peut être activé par la pression exercée dans l'accumulateur. Cependant la production de gaz dans le cas d'un fonctionnement hors des conditions nominales peut ne pas provoquer une pression suffisante pour activer le dispositif de sécurité. Des additifs peuvent être ajoutés dans l'électrolyte, tels que des composés carbonés. Ces additifs se dégagent sous forme gazeuse sous l'effet d'une augmentation de la température, augmentant ainsi la sensibilité du dispositif de sécurité. Cependant les additifs perturbent les réactions chimiques se déroulant dans un fonctionnement normal de l'accumulateur. De ce fait, la durée de vie et les performances de l'accumulateur se trouvent diminuées.

Par conséquent il peut-être avantageux de compléter l'actionnement du dispositif de sécurité par la pression par un actionnement par la température.

Le document FR-A-2881580 décrit un accumulateur comprenant un dispositif coupe-circuit actionnable par une pression interne de l'accumulateur. Le dispositif coupe-circuit comprend une pièce de liaison électrique qui assure le passage du courant. La pièce de liaison est superposée à une membrane, et est isolée électriquement de la membrane. Une pression interne excessive de l'accumulateur entraîne une déformation de la membrane qui provoque une rupture de la pièce de liaison. Cependant le coupe-circuit ne peut-être activé que sous l'effet d'une pression. Le coupe-circuit est donc asservi au processus électrochimique générant de la pression. Il n'est pas possible d'activer le dispositif par une augmentation de la température.

Le document JP-A-63072062 décrit un système d'évent de sécurité actionnable par la température de l'accumulateur. Le système d'évent de sécurité est composé d'un matériau à mémoire de forme connecté à une borne de l'accumulateur à une de ses extrémités, et positionné sur une pièce de scellement de l'accumulateur à son autre extrémité. Sous l'effet d'une élévation excessive de la température le matériau à mémoire de forme se déforme et brise la pièce de scellement de l'accumulateur, permettant ainsi le dégagement des gaz formés dans l'accumulateur. L'activation de ce système est fonction de la température de l'accumulateur. Cependant le système ne peut être activé par une augmentation de la pression. De plus le système ne comprend qu'une fonction d'évent de sécurité, et pas de fonction de coupe-circuit.

Dans les documents ci-dessus, les dispositifs sont actionnables soit par la pression, soit par la température. Aucun des dispositifs n'est sensible à la fois à la pression et à la température.

Le document WO-A-9845887 présente un accumulateur comprenant dans son couvercle un premier dispositif coupe-circuit actionnable par une élévation de la température, et un second dispositif actionnable par une pression excessive dans l'accumulateur. Le premier dispositif coupe-circuit comprend un matériau déformable sous l'effet d'une augmentation de la température et une ligne conductrice. Sous l'effet d'une augmentation de la température, le matériau déformable déplace la ligne conductrice et interrompt le passage du courant. Le second dispositif coupe-circuit comprend une membrane métallique assurant le passage du courant, superposée à une plaque conductrice rigide. La membrane peut être déformée sous l'action d'une pression excessive exercée sur la membrane. La membrane est alors entraînée hors du contact de la plaque conductrice rigide provoquant une interruption du passage du courant. Les dispositifs coupe-circuit du document réalisent également une fonction d'évent de sécurité.

L'accumulateur décrit dans le document précédent comprend une fonction coupe-circuit actionnable par une pression ou une température. Cependant la fonction coupe-circuit est divisée en deux dispositifs : un dispositif actionnable par la pression, et un dispositif actionnable par la température. La fonction d'évent de sécurité n'est actionnable que par une augmentation de la pression. De plus, pour être déformable la membrane ne doit pas être trop épaisse, elle ne peut donc pas conduire un courant élevé, ce qui limite l'accumulateur aux applications de faible puissance.

Il existe donc un besoin pour une fonction coupe-circuit présentant un actionnement par la pression et un actionnement par la température regroupés en un seul dispositif, et qui n'est pas limitée aux applications de faible puissance.

### RESUME DE L'INVENTION

L'invention propose un dispositif coupe-circuit de sécurité comprenant un matériau déformable, une membrane et une pièce de liaison. Le matériau déformable est adapté à se déformer sous l'effet d'une augmentation de la température. Une température excessive entraîne une déformation du matériau déformable qui provoque la rupture de la pièce de liaison. La membrane est également déformable sous l'action d'une augmentation de la pression. Une pression excessive entraîne une déformation de la membrane qui provoque la rupture de la pièce de liaison. Ainsi la pièce de liaison peut être rompue sous l'effet de la pression et/ou de la température. Le dispositif regroupe des moyens d'action sensibles à la pression et à la température, agissant sur une même pièce de liaison.

Plus particulièrement, l'invention propose un dispositif coupe-circuit de sécurité comprenant :
- un matériau déformable adapté à se déformer lorsque la température atteint une valeur seuil ;
- une membrane déformable adaptée à se déformer sous l'effet d'une surpression, et adaptée à se déformer sous l'effet d'une déformation du matériau déformable;
- une pièce de liaison électriquement conductrice, adaptée à rompre sous l'effet de la déformation de la membrane déformable.

Selon un mode de réalisation, le matériau déformable et la membrane déformable se déforment en moins de 10 millisecondes.

Selon un mode de réalisation, la membrane déformable peut rompre sous l'effet d'une surpression.

Selon un mode de réalisation, la membrane déformable peut rompre sous l'effet d'une déformation du matériau déformable provoquée par une élévation de la température.

Selon un mode de réalisation, le matériau déformable présente deux portions rectangulaires parallèles reliées par une portion rectangulaire médiane.

Selon un mode de réalisation, le matériau déformable est en forme d'étoile présentant trois à sept branches, de préférence cinq branches.

Selon un mode de réalisation, la membrane déformable est en forme de dôme convexe avec une déformation centrale concave.

Selon un mode de réalisation, le matériau déformable est un matériau à mémoire de forme comprenant de préférence un alliage Nickel-Titane.

Selon un mode de réalisation, la pièce de liaison est isolée électriquement du matériau déformable et de la membrane déformable.

Selon un mode de réalisation, la pièce de liaison présente une section de passage de courant, largeur par épaisseur, comprise entre 2 mm² et 3 mm².

Selon un mode de réalisation, la membrane déformable est adaptée à se déformer lorsque la pression est supérieure à 3 bars.

Selon un mode de réalisation, le matériau déformable est adapté à se déformer lorsque la température est supérieure à une valeur seuil comprise entre -60°C et 200°C, de préférence entre 40°C et 200°C, de manière encore plus préférée entre 60°C et 100°C.

L'invention concerne également un accumulateur comprenant :
- un faisceau électrochimique comprenant au moins une électrode positive et une électrode négative ;
- une borne intermédiaire reliée au faisceau électrochimique et qui concentre le courant issu des électrodes d'une même polarité ;
- une borne de sortie de courant ;
- le dispositif coupe-circuit de sécurité selon l'invention,
la pièce de liaison étant disposée entre la borne intermédiaire et la borne de sortie de courant.

Selon un mode de réalisation de l'accumulateur, le matériau déformable ne conduit pas le courant entre les électrodes d'une polarité et la borne de sortie correspondante.

Selon un mode de réalisation de l'accumulateur, la membrane déformable ne conduit pas le courant entre les électrodes d'une polarité et la borne de sortie correspondante.

Selon un mode de réalisation, l'accumulateur est de type Li-ion.

### BREVE DESCRIPTION DES FIGURES

D'autres caractéristiques et avantages de l'invention apparaîtront à la lecture de la description qui suit, donnée à titre d'exemple et en référence aux figures qui montrent :
- Figure 1, une vue en coupe d'un exemple de dispositif coupe-circuit selon l'invention ;
- Figure 2, une vue de dessus d'un exemple du matériau déformable ;
- Figure 3, une vue de dessus d'un autre exemple du matériau déformable ;
- Figure 4, un graphe représentant la déformation du matériau déformable;
- Figure 5, une vue en coupe du dispositif coupe-circuit dans son état final après une activation du dispositif par la pression;
- Figure 6, une vue en coupe du dispositif coupe-circuit dans son état final après une activation du dispositif par la température ;
- Figure 7, une vue en coupe d'une partie d'un accumulateur comprenant le dispositif coupe-circuit selon l'invention ;
- Figure 8, une vue en coupe d'un accumulateur prismatique.

### EXPOSE DETAILLE DES MODES DE REALISATION

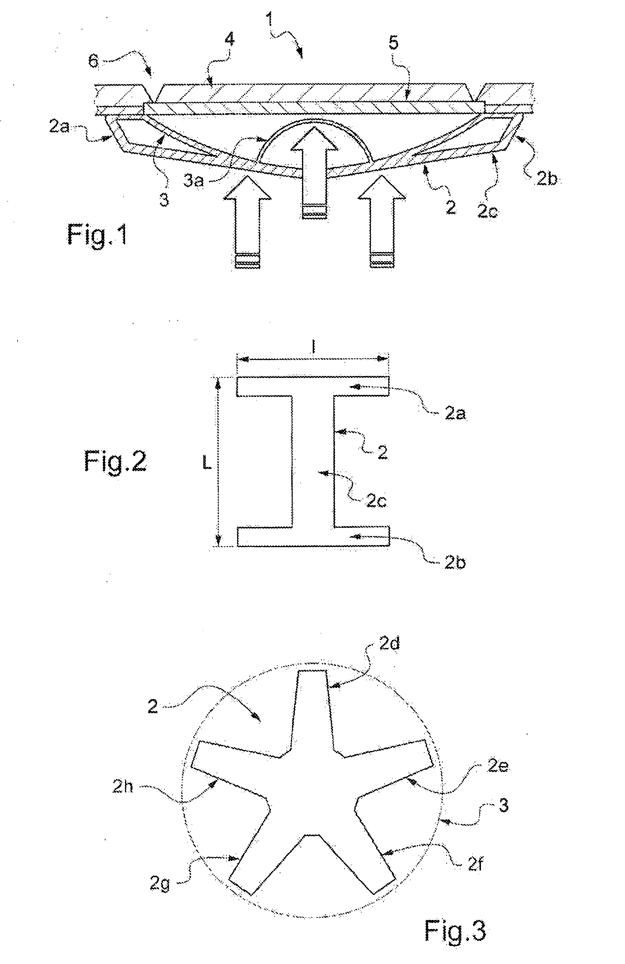

L'invention sera mieux comprise en faisant référence aux figures 1,2 et 3 qui montrent respectivement une vue en coupe d'un exemple de dispositif coupe-circuit de sécurité selon l'invention, et deux exemples de matériau déformable du dispositif coupe-circuit de sécurité selon l'invention.

Le dispositif coupe-circuit de sécurité 1 comprend un matériau déformable 2 adapté à se déformer sous l'effet d'une augmentation de température, une membrane déformable 3 adaptée à se déformer sous l'effet d'une surpression, et/ou d'une déformation du matériau déformable 2. Le dispositif comprend également une pièce de liaison 4 électriquement conductrice. La pièce de liaison 4 est adaptée à rompre sous l'effet de la déformation de la membrane déformable 3. Le dispositif coupe-circuit 1 selon l'invention intègre donc une activation sous l'effet d'une élévation de la pression et une activation sous l'effet d'une élévation de la température. Autrement dit le dispositif coupe-circuit 1 peut être activé par une pression excessive exercée sur la membrane déformable 3, et/ou par une température excessive entraînant une déformation du matériau déformable 2.

Le matériau déformable 2, la membrane déformable 3 et la pièce de liaison 4 peuvent présenter un agencement qui facilite l'action du matériau déformable 2 et de la membrane déformable 3 sur la pièce de liaison 4. Dans l'exemple présenté en figure 1, le matériau déformable 2, la membrane déformable 3, et la pièce de liaison 4 sont superposés. Le matériau déformable 2, la membrane déformable 3, et la pièce de liaison 4 peuvent être également solidaires sur au moins une partie de leur périphérie.

Le matériau déformable 2 est un matériau dont la forme est fonction de sa température. Sous l'effet d'une température supérieure à une température prédéterminée, le matériau déformable 2 adopte une forme qui entraîne la déformation de la membrane déformable 3 et la rupture de la pièce de liaison 4. Le matériau déformable 2 peut être un matériau à mémoire de forme, c'est-à-dire présentant une forme prédéterminée après une élévation de la température. Le matériau déformable 2 peut être un matériau à mémoire de forme à double effet. Ainsi après son activation par la température, le matériau déformable 2 revient à sa forme initiale lorsque la température diminue. De préférence pour une activation définitive du dispositif coupe-circuit de sécurité 1, le matériau déformable 2 est un matériau à mémoire de forme à simple effet. Après son activation par la température, le matériau déformable 2 ne revient pas à sa forme initiale lorsque la température diminue.

De préférence le matériau déformable 2 est situé sous la membrane déformable 3. Le matériau déformable 2 peut présenter également une forme qui facilite l'action d'une pression sur la membrane déformable 3.

La figure 2 présente une vue de dessus d'un exemple du matériau déformable 2 en forme de H. Autrement dit le matériau déformable 2 peut présenter deux portions parallèles 2a, 2b reliées entre elles par une portion médiane perpendiculaire 2c. Grâce aux espaces réalisés dans les parties latérales du matériau déformable 2, une pression peut s'exercer sur la membrane déformable 3 qui lui est superposée. Dans l'exemple présenté en figure 2, le matériau déformable 2 peut par exemple présenter une longueur L comprise entre 10 et 15 mm, de préférence entre 12 et 13 mm, et une largeur 1 comprise entre 10 et 15 mm, de préférence entre 10 et 12 mm. La portion médiane perpendiculaire 2c peut présenter une longueur d'environ 8 à 15 mm, de préférence entre 9 et 10 mm et une largeur d'environ 1 à 5 mm, de préférence entre 2 et 4 mm. Le matériau déformable 2 peut être relié à la membrane déformable 3 et à la pièce de liaison 4 par l'intermédiaire des deux portions parallèles 2a, 2b.

Le matériau déformable 2 peut également être en forme d'étoile présentant plusieurs branches telle que présentée en figure 3. Autrement dit le matériau déformable 2 peut être formé de plusieurs axes reliés ensemble à l'une de leurs extrémités, de façon à former les rayons d'un disque. Lors d'une élévation de la température l'extrémité commune des branches s'élève jusqu'à déformer la membrane déformable 3, et provoquer la rupture de la pièce de liaison 4. Dans cette configuration le matériau déformable 2 en forme d'étoile peut présenter trois à sept branches. De préférence, dans l'exemple présenté en figure 3, le matériau déformable 2 en forme d'étoile présente cinq branches (2d, 2e, 2f, 2g, 2h).

Le matériau déformable 2 peut présenter une forme convexe avant son activation, c'est-à-dire une déformation vers le bas en considérant la figure 1. Autrement dit, avant son activation le matériau déformable 2 peut présenter une déformation qui s'éloigne de la pièce de liaison 4. Après activation par une élévation de la température, le matériau déformable 2 peut présenter une forme concave, c'est-à-dire une déformation vers le haut en considérant la figure 1. Autrement dit, après son activation le matériau déformable 2 peut présenter une déformation qui se rapproche de la pièce de liaison 4. Cette déformation se rapproche de la pièce de liaison 4, jusqu'à provoquer une déformation de la membrane déformable 3 et la rupture de la pièce de liaison 4.

Le matériau déformable 2 a une forme qui est fonction de la température. Un tel matériau peut être par exemple un matériau à mémoire de forme tel qu'un alliage de type Nickel-Titane Ni-Ti, ou un polymère.

La composition et les dimensions du matériau déformable 2 influent également sur sa sensibilité à la température.

Il est ainsi possible de moduler la température d'activation du dispositif coupe-circuit de sécurité 1 en adaptant la composition du matériau déformable 2. Ceci permet d'utiliser le dispositif coupe-circuit de sécurité 1 dans de nombreuses applications différentes sans la nécessité de concevoir spécifiquement la mécanique du dispositif coupe-circuit de sécurité 1. Ainsi le dispositif coupe-circuit de sécurité 1 peut être utilisé dans une plage de température allant de -60°C à 200 °C. En particulier le dispositif coupe-circuit 1 peut être utilisé dans un accumulateur dans une plage de température allant de -60°C à 200 °C.

Le matériau déformable 2 présente également une épaisseur qui lui permet de subir une déformation en fonction de la température. Dans l'exemple présenté en figure 2, le matériau déformable 2 peut par exemple présenter une épaisseur d'environ 0,1 à 2 mm. Dans l'exemple présenté en figure 3, les branches du matériau déformable 2 en forme d'étoile peuvent présenter une épaisseur de 0,2 mm à 1 mm.

Ainsi le matériau déformable 2 peut être adapté à se déformer lorsque la température est supérieure à une valeur seuil comprise entre -60°C et 200°C, de préférence entre 40°C et 200°C, de manière encore plus préférée entre 60°C et 100°C. La valeur seuil de température pour la déformation du matériau déformable 2 peut être déterminée à plus ou moins 2°C près, en faisant varier la composition et/ou l'épaisseur du matériau déformable 2.

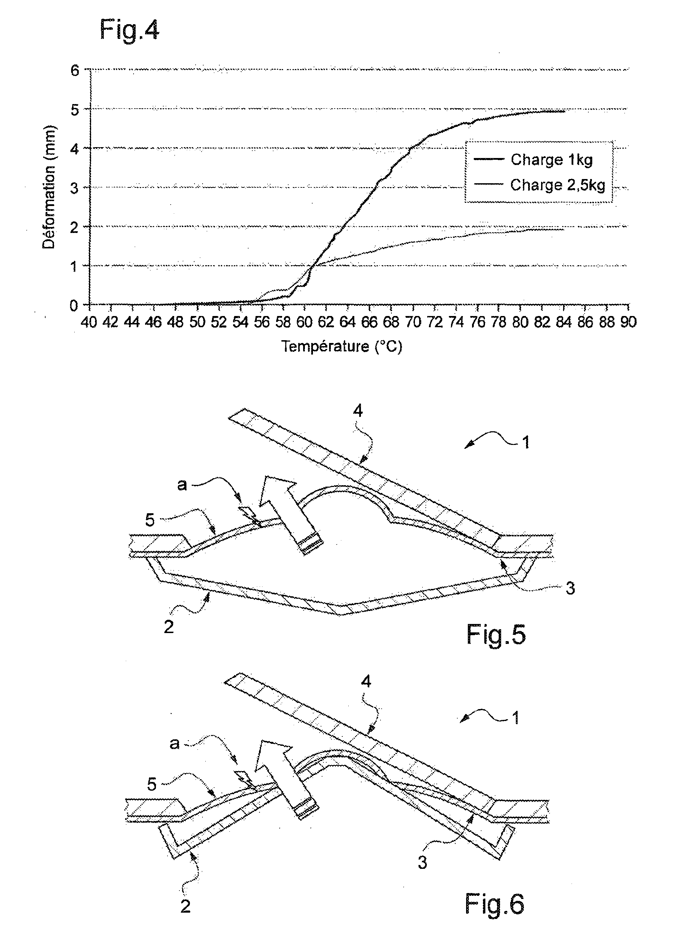

Des tests ont été réalisés qui montrent que le matériau déformable 2 peut efficacement rompre une pièce de liaison 4 sous l'effet d'une élévation de la température. Un matériau déformable 2 a été porté de 25°C à 85°C sous une contrainte mécanique de 10 N, correspondant à une charge de 1kg, et une contrainte mécanique de 25 N, correspondant à une charge mécanique de 2,5kg. La figure 4 présente les déformations résultantes en mm en fonction de la température appliquée. Les courbes indiquent une déformation significative du matériau déformable 2 même sous une contrainte mécanique s'opposant à la déformation. Le matériau déformable 2 peut donc se déformer sous l'effet de la température de façon à entraîner une rupture de la pièce de liaison 4.

La membrane déformable 3 est adaptée à se déformer sous l'effet d'une pression supérieure à un seuil prédéterminé, ou sous l'effet d'une déformation du matériau déformable 2, entraînant ainsi la rupture de la pièce de liaison 4.

De préférence la membrane déformable 3 est placée au dessus du matériau déformable 2 et sous la pièce de liaison 4.

La membrane déformable 3 couvre toute la pièce de liaison 4, c'est-à-dire que sa surface est plus grande que celle de la pièce de liaison 4. La membrane déformable 3 peut avoir une forme sensiblement circulaire, ou rectangulaire, ou toute autre forme adaptée à provoquer la rupture de la pièce de liaison 4.

En particulier la membrane déformable 3 peut être en forme de dôme convexe, c'est-à-dire présenter une déformation vers le bas en considérant la figure 1. Autrement dit, avant son activation la membrane déformable 3 peut présenter une déformation qui s'éloigne de la pièce de liaison 4. La membrane déformable 3 peut également présenter une déformation centrale concave 3a, c'est-à-dire une déformation vers le haut en considérant la figure 1. Autrement dit la partie centrale 3a de la membrane déformable 3 peut présenter une déformation tournée vers la pièce de liaison 4, c'est-à-dire dans le sens suivant lequel la pression s'applique sur le dispositif coupe-circuit de sécurité 1. La partie centrale concave 3a facilite la déformation de la membrane déformable 3 sous l'effet de la pression. De plus, la partie centrale concave 3a se trouve presque au contact de la pièce de liaison 4. Cette partie centrale concave 3a constitue donc une sorte de bouton poussoir contre la pièce de liaison 4 lorsque la membrane déformable 3 se déforme. Ainsi, une faible déformation de la membrane déformable 3 entraîne une rupture de la pièce de liaison 4.

La membrane déformable 3 peut présenter une forme concave après son activation par la pression et/ou par le matériau déformable 2, c'est-à-dire une déformation vers le haut en considérant la figure 1. Autrement dit, après son activation la membrane déformable 3 peut présenter une déformation qui se rapproche de la pièce de liaison 4, jusqu'à provoquer la rupture quasi-immédiate de la pièce de liaison 4 en quelques millisecondes par exemple.

Le matériau de la membrane déformable 3 est fonction du contexte dans lequel est utilisé le dispositif coupe-circuit de sécurité 1. Le matériau de la membrane déformable 3 peut être par exemple de l'acier nickelé, de l'acier inoxydable, de l'aluminium, ou du cuivre. Pour une application dans un accumulateur qui sera décrite plus loin, le matériau de la membrane déformable 3 peut être tous métaux, alliages ou matériaux compatibles avec l'électrolyte de l'accumulateur, en particulier de l'aluminium.

De préférence la membrane déformable 3 présente une très faible épaisseur, par exemple comprise entre 100 et 150µm, de préférence 125µm à l'état aluminium recuit. On peut réaliser une membrane aussi fine puisqu'elle n'est pas destinée à conduire un courant électrique. La forme de la membrane 3 permet néanmoins, malgré sa faible épaisseur, d'exercer une force d'environ 20N sur la pièce de liaison 4 lorsqu'elle se déforme.

Les dimensions de la membrane déformable 3 déterminent sa sensibilité à la pression. Ainsi la forme et les dimensions du dôme de la membrane 3 peuvent être telles que l'amplitude de déformation de la membrane 3 est supérieure à 1,5 mm lorsqu'elle se déforme sous l'effet d'une surpression.

De plus, la membrane déformable 3 peut être adaptée à se déformer sous l'effet d'une pression supérieure à 3 bars. La membrane déformable 3 peut être également adaptée à provoquer la rupture de la pièce de liaison 4 sous l'effet d'une pression comprise entre 5 et 9 bars.

La pièce de liaison 4 assure le passage du courant électrique. La pièce de liaison 4 est adaptée à rompre sous l'effet d'une déformation du matériau déformable 2, ou de la membrane déformable 3. De préférence, la pièce de liaison 4 est placée au dessus de la membrane déformable 3.

La pièce de liaison 4 est en un matériau conducteur électriquement, tel que l'aluminium, le cuivre ou le nickel entre autres. De préférence, la pièce de liaison 4 peut être en aluminium car l'aluminium présente des caractéristiques favorables à une rupture nette sous l'effet de poussée de la membrane déformable 3 et/ou du matériau déformable 2. De plus l'aluminium est particulièrement adapté à une utilisation dans un accumulateur, comme cela est décrit plus loin.

Suivant l'application dans laquelle est utilisée le dispositif coupe-circuit de sécurité 1, la pièce de liaison 4 peut être isolée électriquement du matériau déformable 2 et de la membrane déformable 3 par un isolant 5. L'isolant 5 peut être choisi pour supporter les élévations de température résultant du passage d'un courant de forte intensité dans la pièce de liaison 4, en particulier un courant de l'ordre de 50A et pouvant atteindre 100A. De plus, l'isolant 5 doit présenter des caractéristiques mécaniques suffisamment élastiques pour ne pas contenir la déformation de la membrane 3 et ne pas endiguer l'effort qu'elle exerce sur la pièce de liaison 4. L'isolant 5 peut être en PVC (Poly Chlorure de Vinyle) et conserve ses caractéristiques isolantes sur une plage de température allant de -40 à +120°C.

Cependant une contrainte réside dans le fait que la pièce de liaison 4 doit rompre sous l'effet d'une déformation de la membrane déformable 3, ou du matériau déformable 2. Afin de faciliter sa rupture, la pièce de liaison 4 peut présenter des zones de fragilisation 6. Ces zones de fragilisation 6 peuvent être situées sur une des extrémités ou au centre de la pièce de liaison 4. Les zones de fragilisation 6 peuvent être constituées par des encoches dans l'épaisseur de la pièce de liaison 4, s'étendant de préférence sur toute la largeur de la pièce. Les encoches de fragilisation 6 doivent être suffisamment profondes pour garantir la rupture de la pièce de liaison 4, sans pour autant introduire une résistance interne trop importante qui empêcherait la conduction d'un courant élevé. Par exemple, la pièce de liaison 4 peut présenter une section de 2 à 3 mm² avec une largeur bien supérieure à son épaisseur, afin que la section conductrice de la pièce de liaison 4 ne soit que peu modifiée par les encoches de fragilisation 6. La pièce de liaison 4 peut ainsi conduire un courant pouvant atteindre 100A. Ainsi le dispositif coupe-circuit de sécurité 1 peut être utilisable dans des applications de grande puissance.

Le fonctionnement du dispositif coupe-circuit de sécurité 1 sera mieux compris en faisant référence aux figures 5 et 6 qui présentent des exemples de fonctionnement du dispositif coupe-circuit de sécurité 1 selon l'invention.

La figure 5 présente un exemple d'activation du dispositif coupe-circuit de sécurité 1 par la pression. Sous l'effet d'une pression excessive, il y a déformation de la membrane déformable 3 entraînant la mise sous contrainte de la pièce de liaison 4. La pièce de liaison 4 rompt sous l'effet de la déformation de la membrane déformable 3.

La figure 6 présente un exemple d'activation du dispositif coupe-circuit de sécurité 1 par la température. Sous l'effet d'une température excessive il y a déformation du matériau déformable 2. Le matériau déformable 2 provoque la déformation de la membrane déformable 3, entraînant la mise sous contrainte puis la rupture de la pièce de liaison 4.

L'activation du dispositif coupe-circuit de sécurité 1 peut également être obtenue par une action combinée de la pression et de la température. Dans ce cas une pression excessive entraîne une déformation de la membrane déformable 3. Une température excessive entraîne la déformation du matériau déformable 2, qui provoque également une déformation de la membrane déformable 3. La pièce de liaison 4 est mise sous contrainte, puis se rompt.

Les caractéristiques du dispositif coupe-circuit de sécurité 1, telles que entre autres l'amplitude ou la vitesse de déformation du matériau déformable 2 et de la membrane déformable 3, la gamme de sensibilité à la pression ou la température, la distance par rapport à la pièce de liaison 4, peuvent être choisies en fonction de l'application visée.

Par exemple la membrane déformable 3 peut être adaptée à se déformer d'un coup, exerçant alors une contrainte sur la pièce de liaison 4 et sa rupture. Par exemple le matériau déformable 2 peut présenter une déformation juste suffisante pour déformer la membrane déformable 3, le matériau déformable 2 n'atteignant pas la pièce de liaison 4, et la membrane déformable 3 entraînant la rupture de la pièce de liaison 4. Alternativement, le matériau déformable 2 peut présenter une déformation qui entraîne une déformation de la membrane déformable 3, mais qui appuie aussi mécaniquement sur la pièce de liaison 4.

De préférence, le matériau déformable 2 et la membrane déformable 3 sont calibrés pour provoquer la rupture quasi-immédiate de la pièce de liaison 4. Les activations du matériau déformable 2 et de la membrane déformable 3 se font alors de manière rapide et franche, en évitant les états intermédiaires entre état activé et non activé. Ainsi, le dispositif coupe-circuit de sécurité 1 peut être réactif et adapté à se déclencher totalement et quasi immédiatement dans un délai de l'ordre de quelques millisecondes. Par exemple le matériau déformable 2 et la membrane déformable 3 peuvent se déformer en moins de 10 millisecondes.

Le dispositif coupe-circuit de sécurité 1 peut en outre combiner des fonctions d'évent de sécurité afin de permettre un passage de gaz représenté "a" sur les figures 5 et 6. Le dispositif coupe-circuit de sécurité 1 peut donc réaliser un dégagement de gaz "a" en fonction de la pression et/ou de la température. Ainsi la déformation de la membrane déformable 3 peut provoquer sa rupture.

Autrement dit la membrane déformable 3 peut être calibrée pour rompre sous l'effet d'une surpression. Par exemple la membrane déformable 3 peut être adaptée à rompre sous l'effet d'une pression comprise entre 12 et 16 bars.

La membrane déformable 3 peut également être calibrée pour rompre sous l'effet d'une déformation du matériau déformable 2 provoquée par une élévation de la température. Par exemple la membrane déformable peut rompre sous l'effet d'une déformation du matériau déformable 2 causée par une température comprise entre 40°C et 200°C.

Ainsi, le dispositif de l'invention peut être utilisé uniquement comme coupe-circuit, ou comme coupe-circuit et évent de sécurité. Le dispositif est actionnable sous l'effet d'une élévation de la température, ou d'une élévation de la pression interne. Le dispositif est également actionnable sous l'effet d'une élévation de température et de pression interne.

La membrane déformable 3 peut être affaiblie localement pour faciliter sa rupture. Par exemple la membrane déformable 3 peut présenter un amincissement de son épaisseur. Ainsi la rupture de la membrane déformable 3 est facilitée. De plus la rupture de la membrane peut alors se faire sans décrochement de matière, c'est-à-dire sans déchirure complète de la membrane déformable 3.

Dans le cas où la pièce de liaison 4 est isolée de la membrane déformable 3 et du matériau déformable 2 par l'isolant 5, l'isolant 5 peut également être calibré pour rompre en même temps que la membrane déformable 3, afin d'assurer une fonction d'évent de sécurité.

L'invention concerne également un accumulateur comprenant un dispositif coupe-circuit de sécurité 1 selon l'invention. En particulier, l'accumulateur selon l'invention peut être de type lithium-ion.

L'accumulateur selon l'invention comprend une borne intermédiaire, une borne de sortie de courant, et un faisceau électrochimique comprenant au moins une électrode positive et une électrode négative. La borne intermédiaire est reliée au faisceau électrochimique et concentre le courant issu des électrodes d'une même polarité. L'accumulateur comprend également le dispositif coupe-circuit de sécurité 1, la pièce de liaison 4 étant disposée entre la borne intermédiaire et la borne de sortie de courant. La pièce de liaison 4 sert au passage du courant de la borne intermédiaire vers la borne de sortie de courant.

L'accumulateur selon l'invention présente une sécurité renforcée grâce au dispositif coupe-circuit de sécurité 1.

En effet, dans le cas d'un fonctionnement anormal de l'accumulateur, tel qu'une surcharge de l'accumulateur entraînant une augmentation de la température de l'accumulateur, ou dans le cas d'une élévation de la température de l'accumulateur due à des conditions extérieures anormales, telles qu'un incendie, le dispositif coupe-circuit de sécurité 1 - étant activable par la température - permet de couper efficacement le circuit électrique de l'accumulateur.

Le fonctionnement de l'accumulateur peut également être stoppé dans le cas d'un dégagement gazeux dans sa partie interne car le dispositif coupe-circuit de sécurité 1 est également activable par la pression interne à l'accumulateur.

De plus, tout risque d'explosion de l'accumulateur peut-être prévenu, car le dispositif coupe-circuit de sécurité 1 peut comprendre une fonction d'évent de sécurité activable en fonction d'une pression ou d'une température supérieures à un seuil prédéterminé.

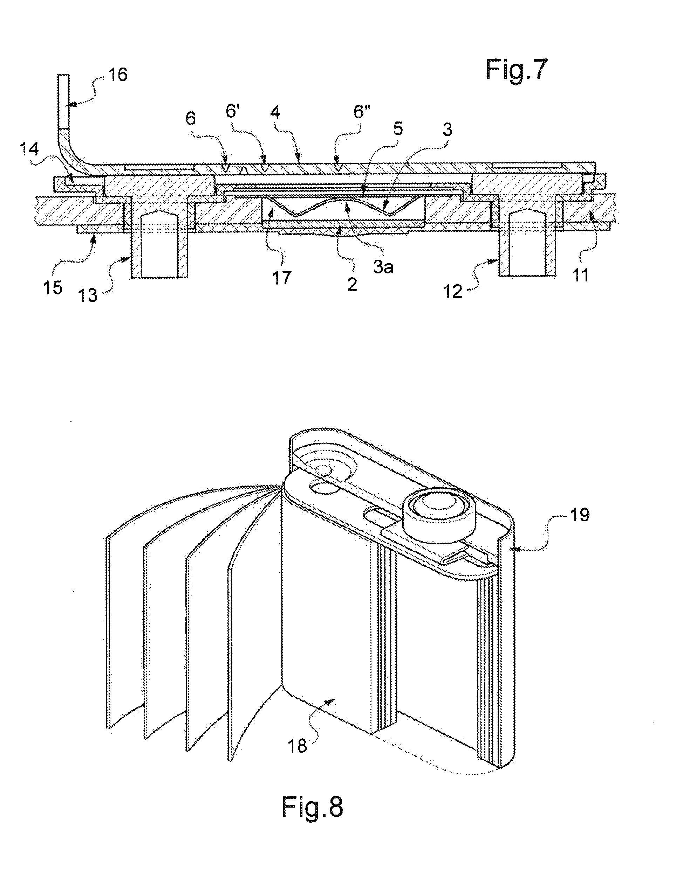

L'accumulateur selon l'invention va être décrit plus précisément en faisant référence à la figure 7 qui présente en coupe longitudinale une portion de la partie haute d'un accumulateur lithium-ion cylindrique étanche muni du dispositif coupe-circuit de sécurité 1.

L'accumulateur comprend un conteneur et un couvercle 11 qui supporte les bornes de sortie de courant de l'accumulateur. Une des bornes de sortie de courant est soudée sur le couvercle ; et l'autre borne de sortie de courant passe à travers le couvercle. Dans l'exemple illustré, le conteneur et le couvercle 11 sont au pôle positif, et c'est donc la borne positive qui est soudée au couvercle 11. La borne négative 13 est fixée au couvercle 11 par un rivet vissé ou serti traversant l'épaisseur du couvercle 11. Un isolant 14 isole électriquement la borne de sortie de courant négative 13 du couvercle 11.

Le faisceau électrochimique constitué par un enroulement d'électrodes positives, négatives et de séparateur, est disposé dans le conteneur autour d'un axe creux qui sert de cheminée de gaz. L'électrode positive est constituée d'un collecteur de courant, qui peut être un feuillard en aluminium, recouvert de matière active constituée d'un oxyde lithié de métaux de transition tel que LiCoO₂ LiNiO₂, LiMnO₂, LiMn₂O₄, ou LiMO₂, où M est un métal de transition ou un mélange de métaux de transition, ou de l'aluminium. La matière active peut être aussi constituée de phosphates de métaux de transition. L'électrode négative est constituée d'un collecteur de courant, qui peut être un feuillard en cuivre, recouvert de matière active constituée d'un matériau capable d'insérer réversiblement du lithium tel que le graphite, le coke, le carbone vitreux, le noir de carbone, ou des alliages ou composites métalliques. Le séparateur peut être en polyoléfine, ou autre composé organique tel que du polyimide ou du polyéthylène téréphtalate. On superpose au moins une électrode positive, au moins un séparateur et au moins une électrode négative pour former le faisceau électrochimique et on enroule le faisceau électrochimique autour de l'axe creux.

Une connexion plane raccorde l'électrode positive du faisceau à une paroi du conteneur, les parois du conteneur et le couvercle 11 étant électriquement conducteurs sont raccordés à la borne de sortie de courant positive. Une autre connexion plane raccorde l'électrode négative du faisceau à la borne intermédiaire 12 reliée électriquement à la borne de sortie de courant négative 13. L'isolant externe 14 isole électriquement la borne intermédiaire négative 12 du couvercle 11.

Les électrodes positives et négatives peuvent être soudées à leur connexion plane. Une connexion de forme plane est préférable, mais tout autre type de connexion est envisageable.

Un isolant interne 15 est placé entre le faisceau électrochimique et les parois du conteneur et du couvercle 11. Il est constitué d'un matériau résistant à la chaleur, chimiquement stable et servant d'isolant électrique afin d'empêcher un contact électrique entre la tranche d'une électrode négative du faisceau et les parois du couvercle 11 et du conteneur reliées à la borne positive, ce qui pourrait occasionner un court-circuit.

Le dispositif coupe-circuit de sécurité 1 est disposé entre la borne intermédiaire négative 12 et la borne de sortie de courant négative 13.

En particulier la pièce de liaison 4 peut être fixée à une de ses extrémités à la borne intermédiaire 12 traversant le couvercle 11 pour relier l'électrode négative du faisceau électrochimique; et à son autre extrémité à la borne de sortie de courant négative 13. La pièce de liaison 4 s'étend donc à l'extérieur du conteneur de l'accumulateur, au-dessus du couvercle 11. Les extrémités de la pièce de liaison 4 peuvent être fixées aux bornes 12, 13 par rivetage ou soudure laser. On évitera les risques de court-circuit entre la pièce de liaison 4 électriquement reliée à la borne négative 13, et le couvercle 11 électriquement relié à la borne positive en fixant la pièce de liaison 4 sur le dessus des bornes 12, 13. Une couche isolante 5 est par ailleurs prévue, qui sera décrite plus loin.

De préférence la pièce de liaison 4 est en aluminium. En effet l'aluminium facilite l'assemblage par soudure de la pièce de liaison 4 avec les bornes en cuivre, cuivre nickelé, ou nickel de l'accumulateur.

La membrane déformable 3 est positionnée à l'intérieur du conteneur, dans une ouverture 17 réalisée dans le couvercle 11, afin de pouvoir subir la pression des gaz provoquée par un dysfonctionnement de l'accumulateur. L'isolant 15 peut être ajouré au niveau de l'ouverture 17 afin de laisser passer les gaz provenant de l'intérieur de l'accumulateur. La membrane déformable 3 peut être constituée par un amincissement localisé du couvercle 11 ou par une feuille rapportée sur l'ouverture 17 prévue dans le couvercle 11. La membrane déformable 3 peut être par exemple soudée sur la périphérie de l'ouverture 17 ménagée dans le couvercle 11.

Dans l'exemple présenté en figure 7, la membrane déformable 3 présente une déformation concave dans sa partie centrale 3a, c'est-à-dire une déformation vers l'extérieur de l'accumulateur.

Le matériau de la membrane déformable 3 est choisi de manière à être compatible avec l'électrolyte du conteneur, et être étanche en fonctionnement normal de l'accumulateur. En effet, la membrane déformable 3 est en contact avec l'intérieur du conteneur et est soumise aux vapeurs d'électrolyte lors du fonctionnement de l'accumulateur. Il ne faut pas que ces projections créent des dysfonctionnements électriques. Ainsi en technologie alcaline par exemple la membrane déformable 3 est en polymère. En technologie Lithium-ion, la membrane déformable 3 est de préférence en aluminium. De plus, l'aluminium est sélectionné pour des raisons de compatibilité de soudage avec le matériau du couvercle 11. En effet, le couvercle 11 1 est en aluminium lorsque le conteneur et le couvercle sont au pôle positif de l'accumulateur.

Le matériau déformable 2 est également positionné à l'intérieur du conteneur, c'est-à-dire sous le couvercle 11, afin de pouvoir être sensible à la température interne de l'accumulateur, et se déformer lors d'une température excessive dans l'accumulateur.

Le matériau déformable 2 peut être en forme de H telle que décrite précédemment. Le matériau déformable 2 peut alors être fixé sur la face interne du couvercle 11 par l'intermédiaire des deux portions parallèles 2a, 2b. Les portions 2a et 2b peuvent être fixées par exemple par une soudure, ou une colle. La partie médiane 2c du matériau déformable 2 est positionnée sous l'ouverture 17 de façon à déformer la membrane déformable 3 lors d'une activation par élévation de la température.

Le matériau déformable 2 peut également être en forme d'étoile telle que décrite précédemment. Le matériau déformable 2 en forme d'étoile peut être introduit dans l'ouverture 17 aménagée dans le couvercle 11, sans être fixé à ses extrémités. Autrement dit les extrémités du matériau déformable 2 en forme d'étoile ne comportent pas de moyens de fixation, tels qu'une colle ou une soudure par exemple. Le matériau déformable 2 en forme d'étoile peut reposer alors sur l'isolant 15 et peut également être maintenu dans l'ouverture 17 par le frottement de ses extrémités sur les parois de l'ouverture 17. Une rondelle peut être introduite entre l'isolant 15 et le matériau déformable 2 en forme d'étoile pour améliorer l'appui du matériau déformable 2 en forme d'étoile lors d'une déformation.

Comme décrit précédemment le matériau déformable 2 en forme d'étoile présente au moins trois branches. Ces branches fournissent un support stable pour le matériau déformable 2, et assurent que la déformation du matériau déformable 2 en forme d'étoile s'effectue dans une direction verticale vers la membrane déformable 3.

En étant introduit dans l'ouverture 17, le matériau déformable 2 est plus proche de la membrane déformable 3. La déformation du matériau déformable 2 lors d'une élévation de la température entraîne donc plus facilement la déformation de la membrane déformable 3.

Le mouvement de translation du matériau déformable 2 en forme d'étoile dans l'ouverture 17 peut être limité par un usinage dans l'ouverture 17, ou par l'ajout d'une pièce supplémentaire, ou par tout autre moyen adapté.

Le matériau déformable 2 est choisi de manière à être compatible avec l'électrolyte de l'accumulateur. En particulier des tests de résistance du matériau déformable 2 à l'électrolyte d'un accumulateur lithium-ion ont été réalisés. Le matériau déformable utilisé dans ces tests est un alliage de Nickel et de Titane Ni-Ti.

L'alliage Ni-Ti a été plongé dans un échantillon de 17,58 g d'électrolyte EC/DMC/EA (c'est-à-dire composé d'un mélange de carbonate d'éthyle, de carbonate de diméthyle, et d'acétate d'éthyle) et comprenant un sel de lithium tel que l'hexafluorophosphate de lithium (LiPF₆) à une concentration de 1,5M, pendant 30 jours à une température de 60°C.

Pour servir de référence, un échantillon témoin de 17,58 g d'électrolyte ne comprenant pas d'alliage Ni-Ti a également été maintenu à une température de 60°C pendant 30 jours.

Les électrolytes ont ensuite été minéralisés et mis en solution acide - 20% acide nitrique, 80% acide chlorhydrique - afin d'être analysés par spectroscopie ICP (ICP - Inductively Coupled Plasma). Les intensités correspondant au nickel et au titane ont été mesurées et comparées à celles obtenues dans des solutions de référence de nickel et de titane. Les solutions de référence de nickel et de titane sont également des solutions acides, respectivement de concentration 50mg/l et 25mg/l.

Le tableau I présente les résultats des mesures ICP

**TABLEAU I**

| Mesures | | Solution de titane de référence | Solution de nickel de référence | Electrolyte sans alliage Ni-Ti | Electrolyte avec alliage Ni-Ti |
|---|---|---|---|---|---|
| Titane | intensité | 13 877 | 1 | 177 | 121 |
| | mg/l | 50 | 0 | 0,64 | 0,44 |
| | µg | | | 11 | 8 |
| Nickel | intensité | 12 | 3472 | 12 | 16 |
| | mg/l | 0,09 | 25 | 0,09 | 0,12 |
| | µg | | | 2 | 2 |

La première et la deuxième colonne présentent les résultats obtenus sur respectivement les solutions de référence de titane et de nickel. Les deux dernières colonnes présentent les résultats obtenus sur respectivement l'échantillon d'électrolyte n'ayant contenu aucun alliage Ni-Ti, et l'échantillon d'électrolyte ayant contenu un alliage Ni-Ti.

Des valeurs d'intensité sensiblement inférieures à 200 indiquent un signal faible dû au bruit de fond de la torche plasma. Les valeurs d'intensité qui sont très inférieures à la limite de détection de la torche plasma sont soulignées dans le tableau 1, et indiquent une absence du corps chimique dans la solution correspondante. Ainsi la solution de titane de référence ne contient pas de nickel, et la solution de nickel ne contient pas de titane. De même, on ne constate pas de présence de nickel dans les deux échantillons d'électrolyte.

Le signal obtenu pour le titane pour les deux électrolytes est proche de la limite de détection de l'appareil. Le faible signal obtenu pour le titane est dû à la présence interférentielle du lithium et du fluor provenant du sel de lithium contenu dans l'électrolyte. Ceci est confirmé par le fait que le signal n'est pas plus important dans l'échantillon d'électrolyte qui a vieilli avec l'alliage Ni-Ti que dans l'échantillon d'électrolyte de référence, c'est-à-dire sans alliage Ni-Ti.

Un matériau déformable 2 tel que l'alliage Ni-Ti résiste donc à une immersion prolongée dans l'électrolyte d'un accumulateur Lithium-ion.

Dans l'exemple présenté en figure 7, le matériau déformable 2 a une forme horizontale avant activation par la température.

Cependant le matériau déformable 2 et la membrane déformable 3 peuvent présenter une forme convexe avant leur activation, c'est-à-dire une déformation vers le bas en considérant la figure 7. Autrement dit, avant leur activation le matériau déformable 2 et la membrane déformable 3 peuvent présenter une déformation vers l'intérieur de l'accumulateur. Le matériau déformable 2 et la membrane déformable 3 peuvent également présenter une forme concave après leur activation, c'est-à-dire une déformation vers le haut en considérant la figure 7. Autrement dit, après leur activation le matériau déformable 2 et la membrane déformable 3 peuvent présenter une déformation vers l'extérieur de l'accumulateur entraînant la rupture de la pièce de liaison 4.

Lors du fonctionnement du dispositif coupe-circuit de sécurité 1, lorsque la membrane déformable 3 pousse la pièce de liaison 4 à rompre, il est nécessaire d'éviter tout risque de contact entre la pièce de liaison 4 électriquement reliée à la borne négative 13 et la membrane déformable 3 retournée reliée au couvercle 11, c'est-à-dire électriquement reliée à la borne positive de l'accumulateur. Un isolant 5 est donc prévu entre la membrane déformable 3 et la pièce de liaison 4. Cet isolant 5 peut être une couche de revêtement, tel qu'un adhésif isolant déposé sur le côté de la membrane déformable 3 faisant face à la pièce de liaison 4, ou une couche de plastique souple interposée entre la membrane déformable 3 et la pièce de liaison 4.

De préférence, le matériau déformable 2 ne conduit pas le courant entre les électrodes d'une polarité et la borne de sortie correspondante. Autrement dit le matériau déformable 2 ne conduit pas le courant entre la borne intermédiaire 12 et la borne de sortie de courant 13.

De préférence, la membrane déformable 3 ne conduit pas le courant entre les électrodes d'une polarité et la borne de sortie correspondante. Autrement dit la membrane déformable 3 ne conduit pas le courant entre la borne intermédiaire 12 et la borne de sortie de courant 13. Ainsi les pièces sensibles à la pression et à la température ne participent pas au passage du courant entre la borne intermédiaire 12 et la borne de sortie de courant 13. Le passage du courant entre la borne intermédiaire 12 et la borne de sortie de courant 13 n'est donc pas limité par des impératifs liés à une sensibilité à la pression et à la température. Le passage du courant étant assuré par la pièce de liaison 4, la pièce de liaison 4 peut par exemple être dimensionnée pour une utilisation de l'accumulateur dans des applications de courant fort.

Les caractéristiques du dispositif coupe-circuit de sécurité 1, telles que entre autres l'amplitude ou la vitesse de déformation du matériau déformable 2 et de la membrane déformable 3, leur gamme de sensibilité à la pression ou la température, leur distance par rapport à la pièce de liaison, peuvent être choisis en fonction de l'application dans laquelle est utilisé l'accumulateur. Par exemple l'accumulateur peut être utilisé dans des applications de grande puissance. En particulier le dispositif coupe-circuit de sécurité 1 peut être calibré pour le passage d'un courant valant jusqu'à 100A.

Afin d'éviter tout risque de détérioration du dispositif coupe-circuit de sécurité 1, un capot de protection peut recouvrir la pièce de liaison 4, et en particulier les zones de fragilisations 6, 6', 6" de la pièce de liaison 4. En effet, la pièce de liaison 4 étant placée sur le dessus du couvercle 11, il y a un risque de défaillance ou de rupture prématurée de la pièce de liaison 4 en cas de contact avec cette pièce.

La pièce de liaison 4 du dispositif coupe-circuit de sécurité 1 peut comprendre une partie partant dans une direction transverse perpendiculaire, réalisant un terminal de connexion 16 tel que décrit dans la demande FR-A-2913530. Le terminal de connexion 16 peut par exemple présenter une zone étamée pour le brasage d'une carte électronique.

L'accumulateur peut être par exemple de type prismatique, ou cylindrique. En particulier l'accumulateur peut être de format prismatique dont la base est un rectangle aux coins arrondis, tel que présenté en figure 8. La figure 8 présente un accumulateur de format prismatique comprenant un faisceau électrochimique 18, et un conteneur 19. Les coins arrondis permettent de minimiser le volume mort entre le faisceau électrochimique 18 et le conteneur 19 de l'accumulateur.

L'accumulateur selon l'invention peut être utilisé dans une variété d'applications. L'accumulateur peut être utilisé dans le domaine spatial, des télécoms, ou dans des appareils portables. Par exemple l'accumulateur peut être utilisé de façon sécurisée au sein d'une batterie d'accumulateurs en parallèle. Dans le cas d'un court-circuit dans l'accumulateur, le dispositif coupe-circuit de sécurité 1 déconnecte l'accumulateur de la batterie, évitant la décharge des autres éléments par le court-circuit de l'accumulateur sans arrêter le fonctionnement général de la batterie.

Le présent mode de réalisation et les figures doivent être considérées comme ayant été présentés à titre illustratif et non restrictif L'invention n'est pas censée être limitée aux détails fournis ici. Elle peut être modifiée en restant dans le cadre de la portée des revendications annexées.

En particulier, le dispositif coupe-circuit de sécurité 1 peut être placé sur le chemin électrique entre l'électrode positive et la borne de sortie de courant positive plutôt qu'entre l'électrode négative et la borne de sortie de courant négative, le conteneur étant alors au pôle négatif. De même, bien que les figures annexées fassent référence à un accumulateur cylindrique, le dispositif coupe-circuit de sécurité 1 de l'invention est tout à fait adaptable sur un accumulateur prismatique.

En outre, les valeurs numériques données en référence à la pièce de liaison 4, au matériau déformable 2, et à la membrane déformable 3 ne sont pas limitatives de la portée de l'invention. En effet, ces valeurs peuvent être modifiées pour être adaptées à des valeurs différentes de courant, de pression, ou de température.

## Revendications

1. Dispositif coupe-circuit de sécurité (1) comprenant :
- un matériau déformable (2) adapté à se déformer lorsque la température atteint une valeur seuil ;
- une membrane déformable (3) adaptée à se déformer sous l'effet d'une surpression,
**caractérisé en ce que** là membrane déformable est également adaptée à se déformer sous l'effet d'une déformation du matériau déformable (2) ; le dispositif comprenant en outre une pièce de liaison (4) électriquement conductrice, adaptée à rompre sous l'effet de la déformation de la membrane déformable (3).

2. Le dispositif coupe-circuit de sécurité (1) selon la revendication 1, tel que le matériau déformable (2) et la membrane déformable (3) se déforment en moins de 10 millisecondes.

3. Le dispositif coupe-circuit de sécurité (1) selon l'une des revendications précédentes dans lequel la membrane déformable (3) peut rompre sous l'effet d'une surpression.

4. Le dispositif coupe-circuit de sécurité (1) selon l'une des revendications précédentes dans lequel la membrane déformable (3) peut rompre sous l'effet d'une déformation du matériau déformable (2) provoquée par une élévation de la température.

5. Le dispositif coupe-circuit de sécurité (1) selon l'une des revendications précédentes dans lequel le matériau déformable (2) présente deux portions rectangulaires parallèles (2a, 2b) reliées par une portion rectangulaire médiane (2c).

6. Le dispositif coupe-circuit de sécurité (1) selon l'une des revendications 1 à 4 dans lequel le matériau déformable (2) est en forme d'étoile présentant trois à sept branches, de préférence cinq branches (2d, 2e, 2f, 2g 2h).

7. Le dispositif coupe-circuit de sécurité (1) selon l'une des revendications précédentes dans lequel la membrane déformable (3) est en forme de dôme convexe avec une déformation centrale concave (3a).

8. Le dispositif coupe-circuit (1) selon l'une des revendications précédentes, dans lequel le matériau déformable (2) est un matériau à mémoire de forme comprenant de préférence un alliage Nickel-Titane.

9. Le dispositif coupe-circuit de sécurité (1) selon l'une des revendications précédentes, dans lequel la pièce de liaison (4) est isolée électriquement du matériau déformable (2) et de la membrane déformable (3).

10. Le dispositif coupe-circuit de sécurité (1) selon l'une des revendications précédentes, dans lequel la pièce de liaison (4) présente une section de passage de courant, largeur par épaisseur, comprise entre 2 mm² et 3 2 mm².

11. Le dispositif coupe-circuit de sécurité (1) selon l'une des revendications précédentes, dans lequel la membrane déformable (3) est adaptée à se déformer lorsque la pression est supérieure à 3 bars.

12. Le dispositif coupe-circuit de sécurité (1) selon l'une des revendications précédentes, dans lequel le matériau déformable (2) est adapté à se déformer lorsque la température est supérieure à une valeur seuil comprise entre -60°C et 200°C, de préférence entre 40°C et 200°C, de manière encore plus préférée entre 60°C et 100°C.

13. Accumulateur comprenant :
- un faisceau électrochimique comprenant au moins une électrode positive et une électrode négative ;
- une borne intermédiaire (12) reliée au faisceau électrochimique et qui concentre le courant issu des électrodes d'une même polarité ;
- une borne de sortie de courant (13) ;
- le dispositif coupe-circuit de sécurité (1) selon l'une des revendications précédentes, la pièce de liaison (4) étant disposée entre la borne intermédiaire (12) et la borne de sortie de courant (13).

14. Accumulateur selon la revendication 13 dans lequel le matériau déformable (2) ne conduit pas le courant entre les électrodes d'une polarité et la borne de sortie correspondante.

15. Accumulateur selon la revendication 13 ou 14 dans lequel la membrane déformable (3) ne conduit pas le courant entre les électrodes d'une polarité et la borne de sortie correspondante.

16. Accumulateur selon l'une des revendications 13 à 15, de type Li-ion.

## Patentansprüche

1. Sicherheitsabschaltvorrichtung (1), welche umfasst:
- ein verformbares Material (2), das so beschaffen ist, dass es sich verformt, wenn die Temperatur einen Schwellenwert erreicht;
- eine verformbare Membran (3), die so beschaffen ist, dass sie sich unter der Einwirkung eines Überdrucks verformt,
**dadurch gekennzeichnet, dass** die verformbare Membran auch so beschaffen ist, dass sie sich unter der Einwirkung einer Verformung des verformbaren Materials (2) verformt;
wobei die Vorrichtung außerdem ein elektrisch leitendes Verbindungsstück (4) umfasst, das so beschaffen ist, dass es unter der Einwirkung der Verformung der verformbaren Membran (3) bricht.

2. Sicherheitsabschaltvorrichtung (1) nach Anspruch 1, wobei sich das verformbare Material (2) und die verformbare Membran (3) i n weniger als 1 0 Millisekunden verformen.

3. Sicherheitsabschaltvorrichtung (1) nach einem der vorhergehenden Ansprüche, wobei die verformbare Membran (3) unter der Einwirkung eines Überdrucks brechen kann.

4. Sicherheitsabschaltvorrichtung (1) nach einem der vorhergehenden Ansprüche, wobei die verformbare Membran (3) unter der Einwirkung einer Verformung des verformbaren Materials (2), die durch eine Erhöhung der Temperatur hervorgerufen wurde, brechen kann.

5. Sicherheitsabschaltvorrichtung (1) nach einem der vorhergehenden Ansprüche, wobei das verformbare Material (2) zwei parallele rechteckige Abschnitte (2a, 2b) aufweist, die durch einen mittleren rechteckigen Abschnitt (2c) verbunden sind.

6. Sicherheitsabschaltvorrichtung (1) nach einem der Ansprüche 1 bis 4, wobei das verformbare Material (2) die Form eines Sterns hat, der drei bis sieben Zacken, vorzugsweise fünf Zacken (2d, 2e, 2f, 2g, 2h), aufweist.

7. Sicherheitsabschaltvorrichtung (1) nach einem der vorhergehenden Ansprüche, wobei die verformbare Membran (3) die Form einer konvexen Kuppel mit einer konkaven zentralen Verformung (3a) hat.

8. Sicherheitsabschaltvorrichtung (1) nach einem der vorhergehenden Ansprüche, wobei das verformbare Material (2) ein Formgedächtnismaterial ist, das vorzugsweise eine Nickel-Titan-Legierung umfasst.

9. Sicherheitsabschaltvorrichtung (1) nach einem der vorhergehenden Ansprüche, wobei das Verbindungsstück (4) von dem verformbaren Material (2) und von der verformbaren Membran (3) elektrisch isoliert ist.

10. Sicherheitsabschaltvorrichtung (1) nach einem der vorhergehenden Ansprüche, wobei das Verbindungsstück (4) einen Stromdurchgangsquerschnitt, Breite mal Dicke, zwischen 2 mm² und 3 mm² aufweist.

11. Sicherheitsabschaltvorrichtung (1) nach einem der vorhergehenden Ansprüche, wobei die verformbare Membran (3) so beschaffen ist, dass sie sich verformt, wenn der Druck höher als 3 bar ist.

12. Sicherheitsabschaltvorrichtung (1) nach einem der vorhergehenden Ansprüche, wobei das verformbare Material (2) so beschaffen ist, dass es sich verformt, wenn die Temperatur höher als ein Schwellenwert ist, der zwischen -60 °C und 200 °C, vorzugsweise zwischen 40 °C und 200 °C, noch stärker bevorzugt zwischen 60 °C und 100 °C liegt.

13. Akkumulator, welcher umfasst:
- ein elektrochemisches Bündel, das mindestens eine positive Elektrode und eine negative Elektrode umfasst;
- eine Zwischenklemme (12), die mit dem elektrochemischen Bündel verbunden ist und die den von den Elektroden mit ein und derselben Polarität erzeugten Strom konzentriert;
- eine Stromausgangsklemme (13);
- die Sicherheitsabschaltvorrichtung (1) nach einem der vorhergehenden Ansprüche, wobei das Verbindungsstück (4) zwischen der Zwischenklemme (12) und der Stromausgangsklemme (13) angeordnet ist.

14. Akkumulator nach Anspruch 13, wobei das verformbare Material (2) nicht den Strom zwischen den Elektroden ein und derselben Polarität und der entsprechenden Ausgangsklemme leitet.

15. Akkumulator nach Anspruch 13 oder 14, wobei die verformbare Membran (3) nicht den Strom zwischen den Elektroden ein und derselben Polarität und der entsprechenden Ausgangsklemme leitet.

16. Akkumulator nach einem der Ansprüche 13 bis 15 vom Typ eines Lithium-Ionen-Akkumulators.

## Claims

1. A safety current interrupter device (1) comprising:
- a deformable material (2) adapted to deform when a temperature reaches a threshold value;
- a deformable membrane (3) adapted to deform under the effect of excess pressure,
**characterized in that** the deformable membrane is also adapted to deform under the effect of deformation of the deformable material (2);
the device further comprising an electrically conductive link member (4), adapted to break as a result of the deformation of the deformable membrane (3).

2. The safety current interrupter device (1) according to claim 1, wherein the deformable material (2) and the deformable membrane (3) deform in less than 10 milliseconds.

3. The safety current interrupter device (1) according to any preceding claim wherein the deformable membrane (3) can break under excess pressure.

4. The safety current interrupter device (1) according to any preceding claim wherein the deformable membrane (3) can break as a result of the deformation of the deformable material (2) caused by a rise in temperature.

5. The safety current interrupter device (1) according to any preceding claim wherein the deformable material (2) comprises two parallel rectangular portions (2a, 2b) connected by a middle rectangular portion (2c).

6. The safety current interrupter device (1) according to any one of claims 1-4 in which the deformable material (2) is star-shaped with three to seven branches, preferably five branches (2d, 2e, 2f, 2g, 2h).

7. The safety current interrupter device (1) according to any preceding claim wherein the deformable membrane (3) is in the form of a convex-shaped dome with a concave central deformation (3a).

8. The safety current interrupter device (1) according to any one of the preceding claims, wherein the deformable material (2) is a shape memory material preferably including a nickel-titanium alloy.

9. The safety current interrupter device (1) according to any one of the preceding claims, wherein the link member (4) is electrically insulated from the deformable material (2) and the deformable membrane (3).

10. The safety current interrupter device (1) according to any one of the preceding claims, wherein the link member (4) has a cross-section area for current flow, width multiplied by thickness comprised between 2 mm² and 3 mm².

11. The safety current interrupter device (1) according to any one of the preceding claims, wherein the deformable membrane (3) is adapted to deform when a pressure exceeds 3 bars.

12. The safety current interrupter device (1) according to any one of the preceding claims, wherein the deformable material (2) is adapted to deform when the temperature exceeds a threshold value of between -60°C and 200°C, preferably between 40°C and 200°C, even more preferably between 60°C and 100°C.

13. A secondary cell comprising:
an electrode plate group comprising at least one positive electrode and negative electrode;
an intermediate terminal (12) connected to the electrode plate group and which concentrates the current from the electrodes of the same polarity;
a current output terminal (13);
the safety current interrupter device (1) according to one of the preceding claims, the link member (4) being arranged between the intermediate terminal (12) and the current output terminal (13).

14. The secondary cell according to claim 13, wherein the deformable material (2) does not conduct current between the electrodes of one polarity and the corresponding output terminal.

15. The secondary cell according to claim 13 or 14 in which the deformable membrane (3) does not conduct current between the electrodes of one polarity and the corresponding output terminal.

16. The secondary cell according to one of claims 13-15, of the Li-ion type.
